(19) Europäisches Patentamt
European Patent Office
Office européen des brevets

(11) **EP 4 459 776 A1**

(12) **EUROPEAN PATENT APPLICATION**

(43) Date of publication:
**06.11.2024 Bulletin 2024/45**

(21) Application number: **24172175.2**

(22) Date of filing: **24.04.2024**

(51) International Patent Classification (IPC):
*H01M 50/403* (2021.01)     *H01M 50/423* (2021.01)
*H01M 50/431* (2021.01)     *H01M 50/443* (2021.01)
*H01M 50/446* (2021.01)     *H01M 10/0525* (2010.01)

(52) Cooperative Patent Classification (CPC):
**H01M 50/403; H01M 10/0525; H01M 50/423;
H01M 50/431; H01M 50/443; H01M 50/446**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 KR 20230055185**

(71) Applicants:
• **SK Innovation Co., Ltd.**
  **Seoul 03188 (KR)**
• **SK ie technology Co., Ltd.**
  **Jongno-gu**
  **Seoul**
  **03188 (KR)**

(72) Inventors:
• **JI, Sang Yoon**
  **34124 Daejeon (KR)**
• **AHN, Jun Hwan**
  **34124 Daejeon (KR)**
• **LEE, Chang Hee**
  **34124 Daejeon (KR)**
• **KIM, Jun Hyung**
  **34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR, METHOD FOR MANUFACTURING THE SAME, AND SECONDARY BATTERY INCLUDING THE SAME**

(57)     Provided are a separator, a method for manufacturing the same, and a secondary battery including the same.

Specifically, a separator including hollow adhesive particles, a method for manufacturing the same, and a secondary battery including the same are provided. The separator according to an exemplary embodiment of the present disclosure includes: a porous substrate; and at least one coating layer which is placed on one or both surfaces of the porous substrate and includes inorganic particles and hollow adhesive particles. The separator of the present disclosure has improved surface adhesive strength, so that it may be adhered to an electrode with high adhesive strength. The present invention further provides a method for manufacturing a secondary battery including the separator. Further provided is a use of the hollow adhesive particles to increase adhesion to a porous separator substrate, and/or to suppress swelling of a separator in a secondary battery.

FIG. 3

**Description**

**TECHNICAL FIELD**

The following disclosure relates to a separator, a method for manufacturing the same, and a secondary battery including the same. Specifically, the present disclosure relates to a separator including hollow adhesive particles, a method for manufacturing the same, and a secondary battery including the same. The present disclosure further relates to a method for manufacturing a secondary battery including the separator.

**BACKGROUND**

Recently, a secondary battery having a higher capacity and being larger in order to be applied to electric vehicles and the like has been developed. As a part thereof, an electrode-separator combination technology of stacking an electrode and a separator and integrating them has been developed as well. However, since a conventional secondary battery having an electrode-separator combination structure has a weak binding force between the electrode and the separator, a defect of becoming separated between the electrode and the separator occurs. Thus, a larger size and a higher capacity are not achieved substantially.

In order to solve the problem, a technology of coating an adhesive material, for example, a polymer resin, on a surface that is in contact with the electrode to provide a separator having improved adhesive strength has been developed. The separator as such is usually manufactured by forming each of an inorganic particle layer and a polymer resin layer for improving heat resistance on a porous substrate, or coating the porous substrate with a one-component coating solution in which a polymer resin and inorganic particles are mixed.

However, in the case of the separator in which the polymer resin layer is separately formed on the inorganic particle layer, since each layer should be separately manufactured, a manufacturing time is long and process efficiency is low, and thus, productivity is poor.

In addition, in the case of a separator in which the polymer resin particles and the inorganic particles are mixed to form a one-component coating layer, the manufacturing process becomes simple, but since the inorganic particles and the polymer resin are present in a mixed state on a surface in contact with an electrode, adhesive strength is poor.

In order to solve these problems, a separator having improved adhesive performance by adding a large amount of the polymer resin may be used, but the separator has various problems, for example in terms of degrading battery performance, which degraded battery performance is e.g., caused by the polymer resin dissolving and eluting into an electrolyte or the polymer resin being swollen by the electrolyte to block a pore layer in the separator, during charge/discharge of a secondary battery.

In order to solve the problems, it is an object of the present invention to provide an improved separator which may have high adhesiveness even with a small amount of an adhesive material, which may function as a buffer against swelling, which may suppress swelling, and/or which may have less electrolyte elution. It is further an object of the present invention to provide an improved method for manufacturing such a separator, as well as to provide an improved secondary battery comprising said separator.

[Related Art Documents]

[Patent Documents]

(Patent Document 1) Korean Patent Laid-Open Publication No. 10-2019-0036724 (April 5, 2019)

**SUMMARY**

According to an aspect of the present disclosure, a separator is provided which may be adhered to an electrode with high adhesive strength with only a small amount of an adhesive material. The separator of the present invention can be used in a secondary battery.

According to another aspect of the present disclosure, a new separator is provided which has the ability to internally accommodate swelling by an electrolyte and other undesired conditions that may arise while, at the same time, providing an adhesive function of the separator.

According to another aspect of the present disclosure, a method for manufacturing a separator which does not need a process of forming a separate adhesive layer and which may produce a separator having improved adhesive strength to an electrode only by a simple process is provided. Specifically, it has been found in the present invention that in a process of applying a coating composition (also referred to herein as slurry composition) including inorganic particles and hollow adhesive particles to form a coating layer, the hollow adhesive particles having a lower specific gravity than the inorganic particles float to form an adhesive layer, and thus, electrode adhesive strength is intended to be provided by one application process without a need for a separate application process for forming an adhesive layer. According to another aspect of the present disclosure, a separator is provided which may contain hollow adhesive particles in a lower amount (which means that the content of hollow adhesive particles is lower) compared with the conventional case of forming a separate adhesive layer, and has excellent electrode adhesive strength even with a lower amount as compared with the conventional case.

According to another aspect of the present disclosure, a new separator is provided, in which the hollow adhesive particles function as a buffer to internally accommodate swelling by an electrolyte to suppress swelling and also suppress elution of the electrolyte.

According to another aspect of the present disclosure, a new separator is provided which suppresses swelling and has excellent adhesive strength, and thus, maintains alignment well even when many electrodes and separators are stacked, and a battery using the same is also provided.

Still according to another aspect of the present disclosure, a secondary battery is provided, which includes a separator having improved adhesive strength to allow a higher capacity and a larger size.

In one general aspect, a separator includes, optionally consists of: a porous substrate; and a coating layer which is placed on one or both surfaces of the porous substrate and includes inorganic particles and hollow adhesive particles; preferably, the separator is suitable for separating a positive electrode from a negative electrode of a secondary battery.

The coating layer may be either directly placed on said surface of said porous structure. Or it may be indirectly placed on said surface of said porous structure, meaning that there may be a further inorganic particle layer between said surface of the porous substrate and the coating layer; this further (or additional) inorganic particle layer, which may be further included between the porous substrate and the coating layer but may not include the hollow adhesive particles, refers to a layer formed of inorganic particles commonly used in the art of separators suitable for batteries, such as the ceramic coating (inorganic particle layer) of conventional ceramic-coated separators (CCS).

The separator has a flat form with two surfaces. If the coating is placed/present on both surfaces of the porous substrate, the coating is in the form of two layers on opposite sides of the porous substrate. The properties of both layers may be the same.

In an exemplary embodiment, when a surface of the coating layer facing the porous substrate is referred to as a first surface and an opposite surface of the first surface is referred to as a second surface, the second surface may have a higher content (amount) of the hollow adhesive particles than the first surface. The respective amount (content) of said first surface and of said second surface of the hollow adhesive particles can be determined by any suitable method that is known to a skilled person. In the present invention, the following method was applied: By applying focused ion beam milling (FIB), the coating of the separator was cut, thereby obtaining a cross-section of the coating. Then, the distribution of the hollow adhesive particles in the thickness direction (that is, in the direction from the second to the first surface, or in the direction from the first to the second surface) of the coating layer was determined, e.g., by using SEM, EDS, or FTIR ("Fourier-transform infrared spectroscopy"). If SEM is used, images of the sample are produced by scanning the surface of the cut coating, and it is thus possible to observe the obtained image. If EDS and FTIR are used, it is possible to thereby quantitatively confirm the distribution of the hollow adhesive particles composed of polymers through elemental analysis such as Al, C, and O.

The gradient between the first and second surface of the coating can be determined using the same methods. If the coating is on both sides of the porous substrate, the surface of the coating layer on one side of the substrate facing the porous substrate is referred to as a first surface and an opposite surface of the first surface of the coating on the same side of the substrate is referred to as a second surface.

In an exemplary embodiment, the coating layer may have a gradient in which the content of the hollow adhesive particles is increased from the first surface towards the second surface of the coating.

The term "gradient" may mean a general trend of an increase of the content of the hollow adhesive particles to the opposite of the first surface, including a structure where the increase is continuously or linear, and a structure where the increase is non-linear and optionally has intermittent constant content (but without an intermittent decrease) of the hollow adhesive particles.

In an exemplary embodiment, the coating layer may include an inorganic particle sub-layer including the inorganic particles and an adhesive sub-layer formed by the hollow adhesive particles.

The inorganic particle sub-layer may be formed at the first surface facing the porous substrate, and the adhesive sub-layer including the hollow adhesive particles may be formed at the second surface opposite the first surface. Within the context of the described sub-layers, the hollow adhesive particles of the adhesive sub-layer may float on the inorganic particles of the inorganic particle sub-layer. Within the meaning of the present invention, the term "floating" refers to circumstances that hollow adhesive particles, which are present in a coating composition and a slurry for its preparation and which typically, due to the hollow structure, have a lower specific gravity than the inorganic particles also present in the coating composition and the slurry for preparing it, upon forming a coating layer will arrange themselves towards the surface of the coating layer, dependent on the gravity. Accordingly, the arrangement of the respective particles follows the principle that the higher the specific gravity, the more these particles (the inorganic particles) will sink to the surface facing the porous substrate, whereas the lower the specific gravity, the more these particles (the hollow adhesive particles) will float towards the opposite surface to the outside of the porous substrate.

In an exemplary embodiment, the coating layer may be at least one or more stacked layers.

In an exemplary embodiment, the hollow adhesive particles may have a hollow rate of 5 to 97%, but are not limited thereto.

It is also possible that the hollow rate is 50 to 95%. Preferably, the hollow rate is 60 to 85%, preferably the hollow rate is 65 to 80%, more preferably the hollow rate is 70 to 80%.

In an exemplary embodiment, the hollow adhesive particles may have an average outer diameter of 10 nm to 10 $\mu$m, or of 500 nm to 2 $\mu$m, or of 500 nm to 1 $\mu$m, but are not limited thereto. The expression "average diameter" of a particle refers to the average diameter of more than one particle.

The expression "diameter" of a particle refers to the diameter of a single particle.

In an exemplary embodiment, the hollow adhesive particles may include, optionally consist of, a hollow core of a hollow structure having an empty inside or forming an inner void space, and a shell layer formed of an adhesive material. The adhesive material may include, optionally consist of, an adhesive resin having adhesive strength at room temperature or at a glass transition temperature (Tg) or higher. In some implementations, the glass transition temperature (Tg) may be the temperature at which chains of a polymer start to move.

In an exemplary embodiment, the adhesive resin may include one or more resins selected from the group consisting of an acrylic-based resin, a fluorine-based resin, and an amide-based resin, and a copolymer thereof or a mixture thereof, and the like, but is not limited thereto.

In an exemplary embodiment, the adhesive resin may be crosslinked.

In an exemplary embodiment, the hollow adhesive particles may further include a structure material layer for maintaining a hollow structure between the hollow core and the shell layer.

In an exemplary embodiment, an inorganic particle layer may be further included between the porous substrate and the coating layer. Herein, the inorganic particle layer is distinguished from the coating layer, and refers to a layer formed of inorganic particles commonly used in the art, that is, a ceramic layer. Specifically, for example, it may be a layer which is formed of only inorganic particles and has pores formed between the inorganic particles, or a layer having pores between the inorganic particles by the inorganic particles bound by a binder. Herein, the inorganic particle layer may not include the hollow adhesive particles.

In another general aspect, a method for manufacturing a separator includes: a coating step of applying a coating composition including inorganic particles and hollow adhesive particles on one or both surfaces of a porous substrate to form a coating layer; and a drying step of drying the coating layer. In one example, a method for manufacturing a separator includes: forming a coating layer by applying a coating composition that includes inorganic particles and hollow adhesive particles onto at least one of a first surface or a second surface of a porous substrate; and drying the coating layer.

In an exemplary embodiment, applying vibration may be further included before the drying step or with the drying.

In an exemplary embodiment, allowing the separator, on which the coating composition is applied, to stand may be further included before drying after the coating step.

In an exemplary embodiment, the coating composition may be applied multiple times on either or both surfaces of the porous substrate. For this purpose, the coating process be applied to the respective surfaces, and allowing the applied coating to stand, wherein a second coating is applied after the first coating has been dried.

In an exemplary embodiment, the coating layer may have a gradient formed by the hollow adhesive particles formed at a surface of the coating layer after the coating step and the drying step. The coating may form an adhesive sub-layer formed of the hollow adhesive particles formed on the surface. In such a sub-layer, the adhesive particles may float on the inorganic particles formed in the inorganic particle sub-layer.

In an exemplary embodiment, the coating composition may have a solid content of 10 to 60 wt%, or of 20 to 50wt%, or of 20 to 40 wt%, but is not limited thereto. In a further exemplary embodiment, the coating composition may have a solid content of 30 wt%.

In an exemplary embodiment, the coating composition may include 0.2 to 20, or 0.2 to 10, or 0.5 to 10, or 0.5 to 5, parts by weight of the hollow adhesive particles with respect to 100 parts by weight of the inorganic particles, but is not limited thereto.

In an exemplary embodiment, the drying may be performed by hot air at 25 to 100°C, or at 25 to 80°C, or at 30 to 60°C. Usually, the drying is performed until there is no more detectable weight loss.

In another general aspect, a secondary battery includes: the separator of the exemplary embodiment.

In still another general aspect, a method for manufacturing a secondary battery includes: placing the separator according to an exemplary embodiment between a positive electrode and a negative electrode and applying heat, pressure, or heat with pressure to integrate the separator and an electrode.

In still another general aspect, there is provided a use of hollow adhesive particles, which are structured to include a hollow core having an empty inside and a shell layer formed of an adhesive material, to increase adhesion of a coating layer containing said adhesive particles to a porous separator substrate, and/or to suppress swelling of a separator in a secondary battery.

Other features and aspects will be apparent from the following detailed description, the drawings, and the claims.

**BRIEF DESCRIPTION OF THE DRAWINGS**

FIG. 1 illustrates an exemplary embodiment of a hollow adhesive particle including a hollow core 11 having an empty inside and a shell layer 12 of an adhesive material.

FIG. 2 illustrates an exemplary embodiment of a hollow adhesive particle including a hollow core 11 having an empty inside, a structure material layer 13 for forming and maintaining a hollow structure, and a shell layer 12 formed of an adhesive material.

FIG. 3 illustrates an exemplary embodiment of a method for manufacturing a separator.

FIG. 4 illustrates a method for evaluating stacking adhesiveness.

[Detailed Description of Main Elements]

10:     hollow adhesive particle
20:     inorganic particle
11:     hollow core
12:     shell layer
13:     structure material layer
100:    porous substrate
200:    coating layer

**DETAILED DESCRIPTION OF EMBODIMENTS**

Technical terms and scientific terms used in the present specification have the general meaning understood by those skilled in the art to which the present disclosure pertains unless otherwise defined, and a description for the known function and configuration obscuring the gist of the present disclosure will be omitted in the following description and the accompanying drawings.

In addition, the singular form used in the present specification may be intended to also include a plural form, unless otherwise indicated in the context.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present disclosure, values which may be outside a numerical range due to experimental error or rounding off of a value are also included in the defined numerical range.

The term "comprise" in the present specification is an open-ended description having a meaning equivalent to the term such as "is/are provided", "contain", "have", or "is/are characterized", and does not exclude elements, materials, or processes which are not further listed.

In the present specification, unless particularly defined, when a layer or member is positioned "on" another layer or member, not only the layer or member is in contact with another layer or member, but also another layer or member exists between two layers or two members.

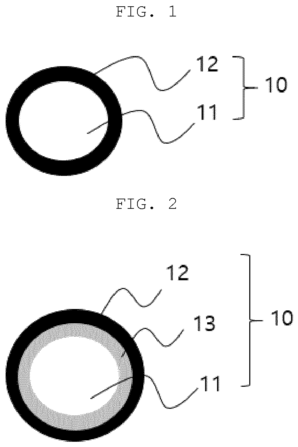

In the present specification, a "hollow adhesive particle" refers to a particle having an empty inside and adhesiveness. Specifically, as shown in FIGS. 1 and 2, it includes a hollow core 11 having an empty inside (that is, an inner void space), and a shell layer 12 including an adhesive material, and the shell layer may be formed of at least one or more layers. In addition, as shown in FIG. 2, a structure material layer 13 for forming and maintaining a hollow structure may be further included between the hollow core 11 and the shell layer 12. FIGS. 1 and 2 are only for specifically illustrating the hollow adhesive particles according to an exemplary embodiment of the present disclosure, and the present disclosure is not limited thereto.

In addition, the term "adhesive particles" refer to particles which has increased peel strength or increased skid resistance as compared with the case of not including the particles, when the separator is brought into contact or compressed with a negative electrode or positive electrode of a battery.

Conventionally, when an electrode and a separator are stacked, a surface in contact with the electrode is coated with an adhesive material to provide a separator having improved adhesive strength. However, a separator having a coating layer formed by mixing an adhesive material and inorganic particles has poor adhesive strength compared with the content of the adhesive material, since the inorganic particles and the adhesive material are present in a mixed state on the surface in contact with the electrode. In order to solve the problem, a large amount of the adhesive material should be added to the coating layer, but in this case, when it is applied to a secondary battery, battery performance may be degraded by the adhesive material.

An exemplary embodiment of the separator according to the present disclosure may include: a porous substrate; and a coating layer which is placed on one or both surfaces of the porous substrate and includes inorganic particles and hollow adhesive particles.

In an exemplary embodiment of the present disclosure, since the hollow adhesive particles have a structure having an empty inside, they have a lower specific gravity than the inorganic particles and may float on the surface. Accordingly, the coating layer is formed by applying the adhesive composition and the inorganic particles in a mixed state simultaneously without a need to have a separate process of applying an adhesive composition for forming an electrode adhesive layer to form a coating layer, and thus, electrode adhesiveness may be imparted by hollow adhesive particles naturally floating on a surface layer.

Since the hollow adhesive particles have a lower specific gravity than the inorganic particles due to the hollow structure, the hollow adhesive particles may be easily guided to the surface of the coating layer when forming the coating layer, by including the hollow adhesive particles in the coating layer as such. Accordingly, there is no need to form a separate adhesive layer, a smaller amount of an adhesive material, that is, a smaller amount of the hollow adhesive particles may be included as compared with the conventional technology of forming a separate adhesive layer, and adhesive strength to an electrode may be exerted even with inclusion of a small amount.

In addition, when swelling occurs by an electrolyte and the like, a separator of a new concept which may provide an effect of internally accommodating swelling to prevent occurrence of external swelling in the coating layer may be provided. In addition, a secondary battery including the separator according to an exemplary embodiment of the present disclosure exerts adhesive strength between an electrode and a separator during battery assembly to improve cell assembly processability, and prevents separation between the electrode and the separator during charge/discharge, thereby preventing various problems such as a resistance increase or a cycle life reduction by separation between the electrode and the separator. In addition, battery swelling may be prevented.

That is, when there is a coating layer including the hollow adhesive particles, a new separator having an effect of internally accommodating swelling by an electrolyte and the like and not being externally swollen while providing an excellent adhesion function between the separator and the electrode may be provided.

In addition, the separator may provide a new separator which internally accommodates swelling by an electrolyte to suppress external swelling and also prevent elution of an adhesive into the electrolyte by the electrolyte.

In addition, since the separator suppresses swelling by an electrolyte to minimize the loss of adhesive strength to an electrode, that is, prevent the loss of adhesive strength by swelling, a new separator which maintains alignment of an electrode module well even when many electrodes and separators are stacked, and a battery using the same are provided. In addition, improvement of electrode performance may be promoted by suppressing swelling and elution.

Specifically, the separator may include hollow adhesive particles made from a polymer as an adhesive which fixes inorganic particles and adhere them with an electrode, in the coating layer in which the inorganic particles are connected to each other to form pores by the inorganic particles.

The separator may impart effects such as suppressed swelling, increased electrode adhesive strength, alignment maintenance performance, and prevention of adhesive strength loss, as compared with a conventional separator manufactured from inorganic particles and an adhesive of a thermoplastic resin, for example, a thermoplastic resin such as polyacrylate and polyamide.

In addition, the hollow adhesive particles having a lower specific gravity or density may be placed to be concentrated on a surface in contact with an electrode due to a specific gravity difference between the hollow adhesive particles and the inorganic particles in the coating layer, and thus, adhesive strength on the surface of the coating layer in contact with the electrode may be improved even when the content of adhesive particles showing adhesiveness is minimized. In addition, since the content of the adhesive material may be minimized, a degraded battery performance problem by the adhesive material may be prevented, of course.

In the separator according to an exemplary embodiment of the present disclosure, when a surface facing the porous substrate is referred to as a first surface and an opposite surface of the first surface is referred to as a second surface, the second surface may have a higher content of the hollow adhesive particles than the first surface.

In addition, the coating layer may have a gradient in which the content of the hollow adhesive particles is increased from the first surface toward the second surface.

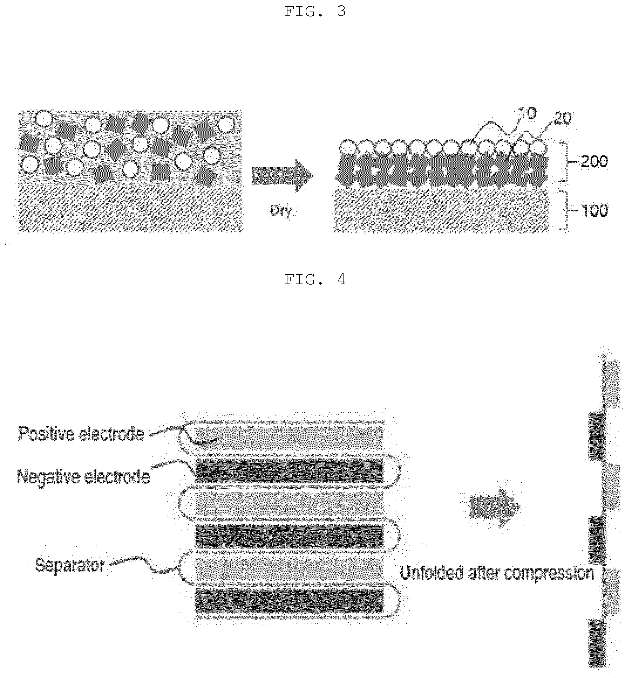

In addition, the coating layer may include an inorganic particle layer including the inorganic particles and an adhesive layer formed by the hollow adhesive particles floating on the inorganic particle layer. That is, as shown in FIG. 3, the hollow adhesive particles may float to form a separate layer from the layer formed of the inorganic particles.

In the present disclosure, the separator may include a single coating layer, but unlike this, a plurality of coating layers may be stacked, and in this case, the content of the hollow adhesive particles to the inorganic particles for each layer varies by a plurality of stacks and the content of the hollow adhesive particles is increased on the surface in contact with an electrode, thereby further improving electrode adhesive strength.

That is, when the coating layer has a single layer structure, due to a specific gravity difference between the hollow adhesive particles and the inorganic particles, in a process of coating the surface of the porous substrate with a slurry in which the hollow adhesive particles and the inorganic particles are mixed and drying the slurry, the hollow adhesive particles may naturally float on the surface to have a concentration gradient or form a separate adhesive layer. Otherwise, after coating the slurry, a process of maintenance for a certain period of time so that the hollow adhesive particles may sufficiently float on the surface and the inorganic particles may settle toward the porous substrate is introduced, and at this time, by adjusting the standing time, the concentration gradient of the hollow adhesive particles may be intentionally formed. That is, when a surface of the coating layer facing the porous substrate is referred to as a first surface and the opposite surface of the first surface is referred to as a second surface, the gradient may be adjusted so that the concentration of the hollow adhesive particles continuously increases from the first surface toward the second surface, or more hollow adhesive particles are distributed on the second surface by adjusting the maintenance time. Otherwise, the hollow adhesive particles may float on the second surface to form the adhesive layer.

In addition, the coating layer may have a multilayer structure in which at least one or more layers are stacked.

As an example, it may be a multilayer structure which is formed of a plurality of layers having different contents of the hollow adhesive particles, by changing the contents of the inorganic particles and the hollow adhesive particles. Specifically, the coating layer may have a structure which is divided into n layers (n is a natural number ≥2) having different concentrations of the hollow adhesive particles. Specifically, n may be 2 to 5.

The coating layer may include a first coating layer having a first content of the hollow adhesive particles which includes a first surface in contact with the porous substrate and a second surface which is the opposite surface of the first surface, a second coating layer having a second content of the hollow adhesive particles which includes a third surface in contact with the second surface and a fourth surface which is the opposite surface of the third surface, and an nth coating layer having an nth content of the hollow adhesive particles. For example, when the coating layer is divided into two layers, it may be divided into a first coating layer having a first content of the hollow adhesive particles and a second coating layer having a second content of the hollow adhesive particles. In addition, each coating layer may be formed by being directly in contact with each other.

It is also possible that the coating layers have different coating compositions: For example, the coating compositions can differ in terms of the inorganic particles and/or hollow adhesive particles used (that is, the respective materials inorganic particles and/or hollow adhesive particles are different); and/or regarding the respective amount of the inorganic particles and/or hollow adhesive particles used. The respective coating layers (first, second, nth) that are included in the coating layer (that is, which form the coating layer) can be delimited from each other as each surface of the layer has a different concentration or gradient of the hollow adhesive particles, by way of its preparation. For example, the first surface of the first layer has a less concentration (amount) of hollow adhesive particles than the second surface of the first layer. The third surface of the second layer (which is adjacent to the second surface of the first layer) has a less concentration (amount) of hollow adhesive particles than the second surface of the first layer. Thus, the first coating layer can be delimited from the second coating layer. This logic applies to all n coating layers that may be present.

In the present disclosure, since the separator has a porous structure, it has pores therein and may have porosity. The size and the porosity of pores formed in the separator may be appropriately adjusted depending on the porosity of the porous and the thickness of the coating layer. As an example, the average size of the pores formed in the separator, that is, the average diameter of the pores, may be 0.001 to 10 um, and the porosity may be 10 to 70%.

The separator according to an exemplary embodiment of the present disclosure may have a gas permeability of 500 sec/100 cc or less, 400 sec/100 cc or less, 300 sec/100 cc or less, 200 sec/100 cc or less, or 100 sec/100 cc or less. The gas permeability is measured in accordance with the standard of ASTM D 726, using a densometer available from Toyoseiki.

In addition, a Gurley permeability change amount $\triangle G$ according to the following equation may be 50 sec/100 cc or less, 45 sec/100 cc or less, 40 sec/100 cc or less, 35 sec/100 cc or less, or 30 sec/100 cc or less:

$$\triangle G = G1 - G2$$

wherein G1 is a Gurley permeability of a separator in which a coating layer is formed on both surfaces of a porous substrate, and G2 is a Gurley permeability of the porous substrate itself. The Gurley permeability is measured in accordance with the standard of ASTM D 726, using a densometer available from Toyoseiki, and its unit is sec/100 CC.

In addition, a heat shrinkage rate at 150°C may be 8% or less, 7% or less, 6% or less, 5% or less, 4% or less, 3% or less, 2% or less, or 1% or less. In addition, a heat shrinkage rate at 170°C may be 8% or less, 7% or less, 6% or less, 5% or less, 4% or less, 3% or less, or 2% or less.

In addition, a thickness change rate when charging and discharging a battery 100 times after assembling the battery may be 5% or less, 4% or less, 3% or less, 2% or less, or 1% or less. In addition, when the separator and the electrode are compressed at a temperature of 60°C or higher and a pressure of 98.0665 Pa (1 kgf/cm$^2$) or more for 10 seconds or more, and then peeled off at 180° using UTM equipment available from INSTRTON according to ASTM D 903, an adhesive strength between the separator and the electrode may be 0.0003266 Nmm (0.5 gf/15 mm) or more, 0.00065 Nmm (1 gf/15 mm) or more, for example, 0.0003266 Nmm to 0.00261 Nmm (0.5 to 4 gf/15 mm).

In addition, electrode adhesive strength may be excellent in the electrode adhesive strength evaluation described later. Specifically, as shown in FIG. 4, when the separator was stacked with 3 sheets of positive electrodes and 3 sheets of negative electrodes having a size of 4×6 cm to be crossed, adhered with 98.0665 Pa (1 kgf/cm$^2$) for 10 seconds under a temperature atmosphere of 60°C, and then unfolded to evaluate the number of attached electrodes, all 6 sheets maintain adhesion without being separated.

[Porous substrate]

As an example, the porous substrate of the separator is not limited as long as it is conventionally used as a substrate of the separator. Specifically, it may be a film, a sheet, non-woven fabric, and textile of a polymer material. Specifically, the porous substrate may include a porous substrate made of a polyolefin-based resin. The polyolefin-based resin may be one or more selected from the group consisting of high-density polyethylene, low-density polyethylene, linear low-density polyethylene, ultrahigh molecular polyethylene, polypropylene, and copolymers thereof, but is not limited thereto.

The thickness of the porous substrate is not particularly limited, but may be in a range of 1 to 100 $\mu$m, 5 to 60 $\mu$m, 5 to 40 $\mu$m, 5 to 20 um, or 5 to 10 um. The porous substrate may be in the form of a porous film.

The size of the pores formed in the porous substrate is not limited as long as lithium ions move well in the size, but it may be advantageous that the average diameter is 0.01 to 20 $\mu$m, 0.05 to 5 um, or 0.05 to 1 $\mu$m, for smooth movement of lithium ions and impregnation of the electrolyte solution. In addition, though it is not particularly limited, porosity may be 5 to 95% or 30 to 60%. The porosity may be calculated by the following equation from the ratio between the weight of a resin having the same volume and the weight of a separator (M g), after cutting a sample into a rectangle of A cm×B cm (thickness: T $\mu$m), and measuring the mass: Porosity (%) = 100 × {1 - M × 10000 / (A × B × T × $\rho$)} wherein $\rho$ (g/cm$^3$) is a density of resin.

[Coating layer]

As an example, the coating layer is formed on one or both surfaces of the porous substrate, and may be a layer of a porous structure in which the inorganic particles and the hollow adhesive particles are connected to each other to form pores. Otherwise, it may have a stacked structure in which an inorganic particle layer in which the inorganic particles are connected to each other to form pores and an adhesive layer formed by the hollow adhesive particles floating on the inorganic particle layer are formed. The coating layer may be formed by being directly in contact with the porous substrate. Otherwise, another layer which is usually used in a separator, specifically, an inorganic particle layer having pores formed between the inorganic particles, may be separately further provided between the porous substrate and the coating layer, but the present disclosure is not limited thereto.

Since the hollow adhesive particles are concentrated on the surface in contact with an electrode, as described above, the coating layer may solve a problem of the conventional separator.

The thickness of the coating layer is not particularly limited, for example, the thickness of the coating layer formed on one surface of the porous substrate may be 0.1 um or more, 0.5 um or more, 1 um or more, 1.5 um or more, 2 um or more, 3 um or more, or 5 um or more, and for example, 0.1 to 10 $\mu$m, 0.2 to 5 um, or 0.2 to 3 $\mu$m, but is not limited thereto. In addition, the coating layer may include an adhesive layer formed by the floating hollow adhesive particles, and the thickness of the adhesive layer is not limited, but may be 0.01 to 20 um. The thickness of the adhesive layer may be adjusted by adjusting the content of the hollow adhesive particles, but is not limited thereto.

As an example, a thickness ratio between the porous substrate : the coating layer of the separator is not limited as long as the purpose of the present disclosure may be achieved, but may be 1:0.01 to 1, or 1:0.05 to 0.5. Within the range, excellent battery stability, swelling suppression, battery performance improvement, and excellent adhesive strength to an electrode may be secured, and thus, the range is preferred, but the present disclosure is not limited thereto. As an example, the coating layer may be formed on 90% or more or 95% or more of the entire area of each surface, or 100% of the entire area of each surface of the porous substrate except the case in which fine defects occur, for each surface of the porous substrate.

The coating layer may further include other commonly known additives in addition to the inorganic particles and the hollow adhesive particles described above. For example, the additive may be a dispersing agent, a lubricant, a defoaming agent, a thickening agent, or the like, and the content may be approximately a commonly used content.

In addition, the coating layer may further include a conventional binder, not the hollow adhesive particles, as an additive for fixing the particles of the inorganic particle layer, but its amount may be significantly smaller than a conventionally used amount. The conventional binder is not particularly limited, but, for example, may include any one or a mixture of two or more selected from acryl-based polymers, styrene-based polymers, vinylalcohol-based polymers, vinylpyrrolidone-based polymers, fluorine-based polymers, and the like.

For example, it may be any one, a mixture of two or more, or a copolymer thereof selected from polyacrylamide, poly(meth)acrylate, acrylic acid-methacrylic acid copolymer, polystyrene, polyvinylalcohol, polyvinylacetate, polyvinylacetate-polyvinylalcohol copolymer, polyvinylpyrrolidone, polyfluorovinylidene, polytetrafluoroethylene, polyhexafluoropropylene, hexafluoropropylene, polyvinylidenefluoride-hexafluoropropylene, polychlorotrifluoroethylene, and the like, but is not limited thereto.

The binder and the additive may be further included appropriately at minimum amounts, but as a non-limiting example, 0.1 to 5 parts by weight of the binder and 0.1 to 3 parts by weight of the additive may be included with respect to 100 parts by weight of the inorganic particles. This is only an example, and the present disclosure is not limited thereto. In an exemplary embodiment, the binder is polyacrylamide.
In a further exemplary embodiment, the inorganic particle is boehmite.
In a further exemplary embodiment, the binder is polyacrylamide and the inorganic particle is boehmite.

The inorganic particles included in the coating layer may be, for example, any one or two or more selected from metal oxides, metal nitrides, metal carbides, metal carbonates, metal hydroxides, metal carbonitrides, and the like. For example, they may be one or more selected from boehmite, $Ga_2O_3$, SiC, $SiC_2$, Quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, and the like, but are not necessarily limited thereto, unless they are electrochemically unstable to have a significant influence on battery performance.
In an exemplary embodiment, the inorganic particle is boehmite.S

The shape of the inorganic particles is not particularly limited as long as the purpose of the porous substrate to improve durability and heat resistance is achieved. Specifically, the inorganic particles may have any one or more shapes selected from the group consisting of spherical, prismatic, and amorphous shapes.

In addition, the size of the inorganic particles is not limited as long as the purpose described above is achieved, and specifically, the size, that is, the average diameter of the inorganic particles may be 0.001 to 100 um, specifically 0.01 to 50 $\mu$m, and more specifically 0.01 to 10 um. Within the range, the separator may have the porosity in the range described above, but is not necessarily limited thereto.

The hollow adhesive particles used in the coating layer may be hollow organic particles or polymer particles, and as shown in FIGS. 1 and 2, they have a hollow formed inside to have lower density and buoyancy than the inorganic particles. The hollow rate of the hollow adhesive particles is not particularly limited, as long as the purpose described above, that is, forming density lower than that of the inorganic particles is achieved. As an example, the hollow rate of the hollow adhesive particles may be 5 to 97% or 50 to 95%, but is not limited thereto. The hollow rate may be calculated by the following equation from the outer diameter and the inner diameter of the hollow adhesive particles. The outer diameter and the inner diameter refer to an average particle diameter and may be measured using for example SEM ("Scanning Electron Microscopy") or similar observation methods. Hollow rate (%) = inner diameter/outer diameter $\times$ 100, wherein the outer diameter refers to an average particle diameter, that is, an average outer diameter of the hollow adhesive particles, and the inner diameter is calculated as a value obtained by subtracting the thickness of the shell layer from the average particle diameter, after measuring the thickness of the shell layer using e.g., SEM, or TEM ("Transmission Electron Microscopy"). In addition, in the case of hollow adhesive particles having a non-uniform hollow shape of the hollow adhesive particles, the hollow rate may e.g., be calculated by a correlation between density measured using powder density measurement (apparent density) and theoretical density. In this case, the hollow rate (%) may be calculated by (1-apparent density/theoretical density)$\times$100.

Further, in the present disclosure, the thickness e.g., of a layer such as the shell layer or of a substrate such as the porous substrate, or of a film, can be measured as follows:
The thickness of a shell layer or of a core, or the diameter of a hollow particle, can be measured by applying electron microscopic observation, such as SEM or TEM, preferably SEM. The thickness of the porous film can be measured by applying a Mitutoyo's thickness meter according to the manufacturer's instructions.

The hollow adhesive particles include the hollow core 11 having an empty inside and the shell layer 12 formed of an adhesive material, as shown in FIG. 1, and the shell layer may be formed of at least one or more layers. In addition, as shown in FIG. 2, the structure material layer 13 for the hollow core forming and maintaining a hollow structure may be further included between the hollow core 11 and the shell layer 12.

As the shell layer of the hollow adhesive particles, a material having adhesiveness to the porous substrate and the electrode may be used, and the material is not particularly limited as long as it is conventionally used as an adhesive material and has adhesive strength. As an example, the adhesive material may be an adhesive resin having adhesive strength at room temperature or a glass transition temperature (Tg) or higher. The adhesive resin may include a thermoplastic polymer, and for example, may include an acryl-based resin, a fluorine-based resin, an amide-based resin, and a copolymer thereof or a mixture thereof, but is not limited thereto. As an example, the shell layer of the hollow adhesive particles may be a shell layer in which the adhesive resin is crosslinked.

In addition, the structure material layer may be formed of a resin which is the same as or different from the shell layer, and may be used without limitation as long as it is a material for maintaining the empty inside of the hollow core. In addition, it may also be formed of a material having adhesiveness or no adhesiveness. Specifically, for example, it may be selected from $SiO_2$, $Al_2O_3$, ZnO, $TiO_2$, $SnO_2$, carbon, polystyrene, polyacrylate, PVDF, and the like, but is not limited thereto.

The size of the hollow adhesive particles is not limited as long as they achieve the purpose described above, and the size, that is, the average outer diameter of the hollow adhesive particles, may be 10 nm to 10 um, 50 nm to 5 $\mu$m, 0.1 to 5 um, or 0.2 to 2 $\mu$m, but is not necessarily limited thereto.

As described above, the hollow adhesive particles are not particularly limited as long as they form a hollow. As an example, they may be prepared by polymerizing acrylate, acrylic acid, and a polyfunctional acryl-based crosslinking agent. Herein, a polar monomer such as acrylic acid may be included, which may not only induce adhesion to the inorganic particles of the coating layer but also improve adhesive strength to the active material or the metal layer of an electrode, and thus, may be preferred, but is not limited thereto.

The hollow adhesive particles may be prepared by various preparation methods, and for example, may be prepared by a method of Korean Patent Laid-Open Publication No. 2020-0138213 (publication date: December 9, 2020, Zeon Corporation, Japan) and the like, but is not limited thereto. The hollow adhesive particles may have a hollow adhesive particle shape having a crosslinked shell layer, for example, by increasing a crosslinking ratio of a crosslinked monomer in the shell layer so that the particles do not collapse, in order to maintain an internal hollow shape.

The shell layer may be a single layer, and may have a plurality of layers, but is not particularly limited. Therefore, the coating layer may include any one of single-structured hollow adhesive particles and double-structured hollow adhesive particles, and unlike this, may both include the single-structured hollow adhesive particles and double-structured hollow adhesive particles. In addition, it may include all of the hollow adhesive particles illustrated in FIGS. 1 and 2.

The coating layer may include more inorganic particles considering the content of the hollow adhesive particles. The content of the hollow adhesive particles may be a small amount to express adhesiveness, and as an example, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1.0 part by weight or more and 20 parts by weight or less, 19 parts by weight or less, 18 parts by weight or less, 17 parts by weight or less, 16 parts by weight or less, or 16 parts by weight of the hollow adhesive particles may be used with respect to 100 parts by weight of the inorganic particles, and a range therebetween may be used. For example, 0.1 to 20 parts by weight, 0.2 to 20 parts by weight, 1 to 20 parts by weight, 1 to 15 parts by weight, 1 to 10 parts by weight, 1 to 8 parts by weight, or 1 to 5 parts by weight may be included, and though it is not limited thereto, sufficient electrode adhesive strength may be exerted in the range. In addition, if necessary, 0.1 to 5 parts by weight of a non-hollow polymer binder and 0.1 to 5 parts by weight of an additive may be further included with respect to 100 parts by weight of the inorganic particles, but the present disclosure is not limited thereto.

[Method for manufacturing separator]

Hereinafter, a method for manufacturing a separator will be described in detail.

In the present disclosure, a method for manufacturing a separator includes: a coating step of applying a coating composition including inorganic particles and hollow adhesive particles on one or both surfaces of a porous substrate to form a coating layer; and a drying step of drying the coating layer.

As an exemplary embodiment, as shown in FIG. 3, a coating composition including inorganic particles 20 and hollow adhesive particles 10 is applied on one surface of a porous substrate 100, and then dried, so that the content of the hollow adhesive particles is higher on the surface of a coating layer 200, that is, a surface which is not in contact with the porous substrate. Otherwise, the hollow adhesive particles may be substantially guided to the surface to form an adhesive layer.

As an example, when a surface facing the porous substrate is referred to as a first surface and an opposite surface of the first surface is referred to as a second surface, the second surface may have a higher content of the hollow adhesive particles than the first surface.

As an example, the coating layer may be manufactured so as to have a gradient in which the content of the hollow adhesive particles is increased from the first surface toward the second surface. Otherwise, the coating layer may include an inorganic particle layer including the inorganic particles and an adhesive layer formed by the hollow adhesive particles floating on the inorganic particle layer.

As an exemplary embodiment, in order to intentionally induce a gradient by a specific gravity difference between the hollow adhesive particles and the inorganic particles or formation of a separate adhesive layer, before the drying step, it may be allowed to stand for a certain period of time, vibrated, or allowed to stand and vibrated simultaneously or continuously, respectively, and then dried. That is, after the coating composition is applied, it may be allowed to stand for a certain period of time and then dried. Otherwise, after the coating composition is applied, it may be allowed to stand for a certain period of time, vibrated, and then dried. Otherwise, after the coating composition is applied, it may be vibrated while being allowed to stand for a certain period of time, and then dried. Otherwise, after the coating composition is applied, it may be allowed to stand for a certain period of time and then dried with vibration. Otherwise, after the coating composition is applied, it may be vibrated and then dried. Otherwise, after the coating composition is applied, it may be dried with vibration. As an exemplary embodiment, a time for standing for a certain period of time may be adjusted to adjust the gradient of the hollow adhesive particles, or form an adhesive layer formed by the floating hollow adhesive particles.

As an exemplary embodiment, when the coating layer is formed on both surfaces of the porous substrate, the coating layer may be formed on one surface and then formed on the other surface. Coating may be performed on both surfaces simultaneously, but as intended in the present disclosure, it may be preferred to apply the composition individually in terms of guiding the hollow adhesive particles to the surface.

As described above, the hollow adhesive particles move to an air surface (opposite surface of the surface in contact with the porous substrate) by the specific gravity difference and dried, whereby many hollow adhesive particles having adhesive properties are present on the surface, and adhesive strength to an electrode may be expressed even when a low content of the hollow adhesive particles is used.

The hollow adhesive particles may adjust a crosslinking degree to adjust strength, and in particular, adjust compression strength, and induce an increase in heat resistance.

The method for manufacturing a separator as such may easily produce a separator having excellent adhesive strength to an electrode only by forming the coating layer including the hollow adhesive particles on the porous substrate.

In addition, as an exemplary embodiment, the coating layer may further include a non-hollow organic binder as a conventional organic binder described above, but the content may be significantly decreased by the use of the hollow adhesive particles.

In the manufacturing method, since the porous substrate, the inorganic particles, the hollow adhesive particles, and the manufactured separator are as described above, the detailed description thereof will be omitted, and each step will be further described.

The coating composition may be in a slurry form in which the inorganic particles and the hollow adhesive particles are dispersed in a solvent. Besides, the coating composition may further include a non-hollow polymer binder, if necessary, and also, may further include an additive commonly used in the art.

The solvent is not particularly limited as long as the inorganic particles and the hollow adhesive particles which are solids may be dispersed therein. As an example, water, lower alcohols such as ethanol, methanol, and propanol, solvents such as dimethylformamide, acetone, tetrahydrofuran, diethylether, methylene chloride, N-ethyl-2-pyrrolidone, hexane, and cyclohexane, or a mixture thereof may be used, but the present disclosure is not necessarily limited thereto.

The solid content in the coating composition in a slurry form may be appropriately adjusted so that the composition is easily applied and may induce a layer separation phenomenon by a density difference between the inorganic particles and the hollow adhesive particles described above during drying. Specifically, the solid content in the coating composition may be 10 to 60 wt% or 20 to 50 wt%, but is not limited thereto. The solid includes the inorganic particles and the hollow adhesive particles, and also, if necessary, may further include a non-hollow polymer binder. As an example, the solid content may include 0.1 to 20 parts by weight, 0.1 to 15 parts by weight, 0.1 to 10 parts by weight, 0.1 to 8 parts by weight, 0.1 to 5 parts by weight, or 0.1 to 2 parts by weight of the hollow adhesive particles with respect to 100 parts by weight of the inorganic particles. In addition, if necessary, 0.1 to 5 parts by weight of a non-hollow polymer binder and 0.1 to 5 parts by weight of an additive may be further included with respect to 100 parts by weight of the inorganic particles, but the present disclosure is not limited thereto.

In addition, the coating composition may further include an additive within a range which does not significantly degrade applicability or battery performance. Specifically, for example, the additive may be a dispersing agent, a lubricant, a deforming agent, a thickener, or the like, and is not limited thereto, and since it is as described above, additional description will be omitted.

A coating method of coating one or both surfaces of the porous substrate with the coating composition is not limited, and specifically, for example, may be a common coating method such as bar coating, dip coating, flow coating, knife coating, roll coating, gravure coating, and spray coating.

In the drying step, a dying means is not particularly limited as long as 90% or more of the solvent may be removed. A drying temperature may be changed depending on the solvent, and for example, may be 20 to 200°C, and is not limited unless the surface structure is changed by rapid evaporation of the solvent or the hollow adhesive particles are melted and collapse. As a specific example, drying may be performed by hot air at 25°C to 100°C and a drying time is not limited, but, for example, 5 seconds to 300 seconds. In addition, drying may be performed by a method of infrared, near-infrared, heating roll, and a hybrid form thereof. Within the range, the hollow adhesive particles float well, so that more hollow adhesive particles may be present in an upper area, an adhesive layer, or an nth coating layer.

In an exemplary embodiment, the drying step may impart vibration or an artificial standing time before drying, or the concentration gradient of the hollow adhesive particles may be imparted by the mixing means.

When the vibration is applied, the hollow adhesive particles may float more easily by a specific gravity difference between the inorganic particles and the hollow adhesive particles. A vibration method is not particularly limited as long as it may apply vibration to the coating composition. Vibration may be directly applied to the coating composition by applying energy, for example, by ultrasonic waves and the like. Unlike this, vibration may be applied to the coating composition by applying physical vibration e.g., by a motor.

In an exemplary embodiment, a standing step may be further included before the drying step so that the gradient of the hollow adhesive particles is sufficiently formed. Specifically, the coating composition is applied on a porous substrate, and allowed to stand for 30 seconds to 1 hour, so that the hollow adhesive particles sufficiently float on the surface of the coating layer. A standing temperature may be 0 to 50°C, preferably room temperature (25±5°C), but is not limited thereto.

[Secondary battery]

Hereinafter, a secondary battery will be described in detail.

In the present disclosure, the secondary battery includes the separator described above, and specifically, may have a structure in which the separator described above is interposed and combined between two electrodes, which are a negative electrode and a positive electrode.

Specifically, the positive electrode and the negative electrode are not limited as long as they are common materials used as the positive electrode and the negative electrode of a secondary battery.

The secondary battery including the separator described above has improved adhesive strength between the electrode and the separator, thereby preventing separation between the electrode and the separator during charge and discharge. Thus, various problems such as a resistance increase or a reduced cycle life by separation between the electrode and the separator may be solved, and a higher capacity and a larger size are allowed, and thus, industrial availability may be substantially very high. In addition, adhesive strength is high, but less adhesive material is included, and thus, a battery performance degradation problem by the adhesive material may be prevented.

The invention also refers to a separator and secondary battery prepared by using the methods of the present invention.

Hereinafter, a method for manufacturing a secondary battery will be described in detail.

In the present disclosure, the method for manufacturing a secondary battery is a method for manufacturing the secondary battery described above, and includes placing the separator described above between two electrodes, and applying heat, pressure, or heat with pressure to adhere an electrode on the separator. The method for manufacturing a secondary battery as such may simply produce a secondary battery having very high durability.

Adhesion may be performed by applying heat, pressure, or heat with pressure, but specifically, may be heat fusion which applies both heat and pressure. When the adhesion as such is performed, hollow adhesive particles may be broken. Thus, higher adhesive strength may be rather provided.

Specifically, adhesion may be performed by applying heat to the temperature at or higher than the glass transition temperature (Tg) of the hollow adhesive particles, more specifically, Tg to 1.2Tg of the hollow adhesive particles, but is not limited thereto. However, the hollow adhesive particles may be broken while maintaining high adhesive strength within the range.

Hereinafter, the present disclosure will be described in more detail with reference to the examples and the comparative examples. However, the following examples and comparative examples are only an example for describing the present disclosure in more detail, and do not limit the present disclosure in any way.

Hereinafter, the physical properties were measured as follows:

1) Adhesiveness to electrode

A manufactured separator was placed between a positive electrode and a negative electrode and adhered at 60°C, 98.0665 Pa (1 kgf/cm$^2$), for 10 seconds, and adhesive strength to the electrode was evaluated.

The positive electrode and the negative electrode used in the evaluation were manufactured as follows:

Manufacture of positive electrode: 92 wt% of a lithium cobalt composite oxide ($LiCoO_2$) as a positive electrode active material, 4 wt% of carbon black as a conductive material, and 4 wt% of polyvinylidene fluoride (PVDF) as a binder were added to N-methyl-2-pyrrolidone (NMP) as a solvent to prepare a positive electrode mixture slurry. The prepared slurry was applied on an aluminum (Al) thin film having a thickness of 30 $\mu$m, dried at a temperature of 120°C, and roll-pressed to manufacture a positive electrode having a thickness of 140 um.

Manufacture of negative electrode: 96 wt% of graphite carbon, 3 wt% of PVDF as a binder, and 1 wt% of carbon black as a conductive material were added to NMP as a solvent to prepare a negative electrode mixture slurry. The prepared slurry was applied on a copper (Cu) thin film having a thickness of 20 $\mu$m, dried at 120°C, and roll-pressed to manufacture a negative electrode having a thickness of 150 $\mu$m.

Electrode adhesive strength was measured by peeling off at 180° using UTM equipment available from INSTRON in accordance with ASTM D 903. The unit of adhesive strength is Nmm (gf/15 mm) .

2) Stacking adhesiveness

The electrode used in the adhesiveness evaluation was cut into a size of 4 cm wide and 6 cm long, and 3 sheets of cut positive electrodes and 3 sheets of cut negative electrodes were stacked by being crossed on the surface of the separator as shown in FIG. 4, adhered for 10 seconds at 98.0665 Pa (1 kgf/cm$^2$) under a temperature atmosphere of 60°C, and unfold, thereby evaluating the number of adhered electrodes.

3) Gas permeability

The gas permeability was measured using a Gurley type densometer available from Toyoseiki in accordance with JIS P8117. The measured value was corrected with a thickness value and used after being converted into a value having no difference depending on the thickness.

4) Gurley permeability change amount

The Gurley permeability change amount $\triangle$G was calculated as follows:

$$\triangle G = G1 - G2$$

wherein G1 is a Gurley permeability of a separator in which a coating layer is formed on both surfaces of a porous substrate, and G2 is a Gurley permeability of the porous substrate itself. The Gurley permeability is measured in accordance with the standard of ASTM D 726, using a densometer available from Toyoseiki, and its unit is sec/100 CC.

5) Heat shrinkage rate

A separator of 10 cm$\times$10 cm was allowed to stand at 130°C, 150°C, and 170°, respectively, for 1 hour, an area reduction rate was measured, and a heat shrinkage rate was calculated by the following equation:

Heat shrinkage rate (%) = ((lenght before heating - lenght after heating) / lenght before heating) x 100.

6) Battery performance and battery deformation rate

The manufactured separator between a positive electrode and a negative electrode was used to assemble a pouch type battery in a stacking manner, and an electrolyte solution which was ethylene carbonate (EC)/ethyl methyl carbonate (EMC)/dimethyl carbonate(DMC)=3:5:2 (volume ratio) in which 1M lithium hexafluorophosphate ($LiPF_6$) was dissolved was injected into each of the assembled batteries to manufacture a lithium secondary battery. Thus, a pouch type lithium ion secondary battery having a capacity of 2 Ah was manufactured. Evaluation of the resistance (DC-IR) of the lithium secondary battery used a J-pulse (Japan Electric Vehicle Association Standards, JEVS D 713) method which evaluates 10 seconds discharge and charge characteristics at 0.25 C, 0.5 C, 1.0 C, 1.5 C, 2.0 C, and 2.5 C. The average impedance of three batteries was calculated by the above method to calculate an initial resistance value and the standard deviation thereof. A relative value of the initial resistance refers to an increased value as compared with the initial resistance of an uncoated porous substrate (Comparative Example 2).

Relative comparison with Ref. (%) = ((Impedance - Impedance$_{substrate}$) / Impedance$_{substrate}$) x 100

In the case of a cyclic life, after charging/discharging at 0.5 C 100 times, the impedance was calculated by J-pulse as in the method of measuring the initial resistance, thereby calculating the average and the standard deviation of the three. A resistance change after charging/discharging 100 times, calculation was performed as follows:

Relative changes in impedance (%) = ((Impedance$_{100\ cycles}$ - Impedance$_{initial}$) / Impedance$_{initial}$) x 100

The battery deformation rate was calculated by measuring a thickness change of the battery after charging/discharging 100 times.

The thickness of the battery was obtained by measuring the thickness of the battery at 5 points (4 points of corners and 1 point of center) and calculating the average value.

$$\Delta Th\ (\%)\ =\ ((Thn-Th0)/Th0)\ \times\ 100$$

wherein Th0 is an initial battery thickness, and Thn is a battery thickness measured after charging/discharging the secondary battery 100 times.

7) Average particle diameter and average outer diameter

Average particle diameter (D50), D10, and D90 were measured using S3500 available from Microtrac which is a particle size analyzer.

[Example 1]

3 parts by weight of polyacrylamide (Mw 150,000 g/mol, Sigma Aldrich) with respect to 100 parts by weight of boehmite ($\gamma$-AlO(OH)) having an average particle diameter of 300 nm was added to water, and 0.7 parts by weight of a dispersing agent (BYK-2018) with respect to 100 parts by weight of boehmite was added and stirred, thereby preparing a uniform water-based slurry having a solid content of 30 wt%. 1 part by weight of hollow acryl particles having an average outer diameter of 0.9 um and a hollow rate of 78% which were prepared according to Example 5 of Korean Patent Laid-Open Publication No. 2020-138213A (publication date: December 9, 2020) with respect to 100 parts by weight of boehmite was added, and water was further added, thereby preparing a slurry composition having a final solid content of 25 wt%. The prepared slurry composition, as a water-based slurry, was coated on both surfaces of a polyolefin microporous film having a thickness of 9 um (ENPASS, SK Innovation, average pore size: 40 nm) as a substrate using bar coating at a speed of 10 m/min, and then dried with hot air at 45°C. The drying was performed until there was no more weight loss. Then, winding was carried out. The thickness of the double-sided coating layer after drying was 3.0 pm, respectively. The physical properties of the manufactured separator were evaluated and are listed in Table 1, and the manufactured separator was used to evaluate cell physical properties which are listed in Table 2.

The manufactured separator was observed using an energy dispersive spectrometer (EDS) attached to a scanning electron microscope (SEM), and as a result, it was confirmed that hollow acryl particles floated on the surface to form an adhesive layer.

[Example 2]

The process was performed in the same manner as in Example 1, except that the slurry composition was applied on one surface of a polyolefin microporous film fixed to a glass plate having a size of 0.2 m×0.2 m using bar coating and allowed to stand for 3 minutes, ultrasonic vibration was applied to the glass plate, drying with hot air at 45°C until there was no more weight loss. This coating process was repeated on the other surface, so that one coating was applied on each side. The physical properties of the manufactured separator were evaluated and are listed in Table 1, and the manufactured separator was used to evaluate cell physical properties which are listed in Table 2.

The manufactured separator was observed using EDS attached to the scanning electron microscope (SEM), and as a result, it was confirmed that hollow acryl particles floated on the surface to form an adhesive layer. In addition, it was confirmed that more hollow acryl particles floated on the surface than Example 1.

[Example 3]

The process was performed in the same manner as in Example 1, except that 2 parts by weight of the hollow acryl particles with respect to 100 parts by weight of boehmite were added. The physical properties of the manufactured separator were evaluated and are listed in Table 1, and the manufactured separator was used to evaluate cell physical properties which are listed in Table 2.

[Example 4]

The process was performed in the same manner as in Example 1, except that 5 parts by weight of the hollow acryl particles with respect to 100 parts by weight of boehmite were added. The physical properties of the manufactured separator were evaluated and are listed in Table 1, and the manufactured separator was used to evaluate cell physical properties which are listed in Table 2.

[Comparative Example 1]

A slurry was prepared in the same manner as in Example 1, except that the hollow acryl particles were not used, and a separator was manufactured in the same manner as in Example 1. The physical properties of the manufactured separator were evaluated and are listed in Table 1, and the manufactured separator was used to evaluate cell physical properties which are listed in Table 2.

[Comparative Example 2]

The physical properties of the polyolefin microporous film (ENPASS, SK Innovation, average pore size: 40 nm) used in Example 1 were evaluated, and are shown in the following Table 1. That is, the physical properties of the polyolefin microporous film itself were measured without forming the coating layer and are shown in Table 1, and the physical properties of a cell using the film were measured and are listed in Table 2:

[Table 1]

| | Thicknesses of Coating layer | Heat shrinkage | | | | Electrode adhesiveness | | |
| | | (TD%) | | | | Peeling Test | | Stacking adhesive |
| | μm | 130°C | 150°C | 170°C | sec/ 100 cc | Negative electrode | Positive electrode | ness (1~6EA) |
| | | | | | | Nmm (gf/15 nm) | | |
| Example 1 | 3/3 | 1.1 | 1.9 | 2.2 | 27 | 0.00078 (1.2) | 0.00078 (1.2) | 6 |
| Example 2 | 3/3 | 1.1 | 1.9 | 2.2 | 27 | 0.000975 (1.5) | 0.000975 (1.5) | 6 |
| Example 3 | 3/3 | 1.4 | 3.2 | 4.1 | 26 | 0.001235 (1.9) | 0.001625 (2.5) | 6 |
| Example 4 | 3/3 | 1.7 | 7.4 | 7.9 | 22 | 0.00247 (3.8) | 0.002405 (3.7) | 6 |
| Comparative Example 1 | 3/3 | 1.1 | 1.8 | 2.1 | 31 | 0.00013 (0.2) | 0.00013 (0.2) | 1 |
| Comparative Example 2 | 0/0 | 6.9 | 56 | 62 | 0 | 0.000065 (0.1) | 0.000065 (0.1) | 0 |

[Table 2]

| | Impedance Initial | | | Impedance 100th cycle | | | |
| | Average (mΩ) | Standard deviation (STD) (mΩ) | Relative comparison with Ref. (%) | Average (mΩ) | STD (mΩ) | Relative changes in impedance (%) | Relative changes in cell thickness (%) |
| Example 1 | 27.82 | 0.43 | 4.0 | 32.70 | 0.80 | 17.5 | 1.2 |
| Example 2 | 27.99 | 0.34 | 4.6 | 32.39 | 0.61 | 15.7 | 1.2 |

(continued)

| | Impedance Initial | | | Impedance 100th cycle | | | |
|---|---|---|---|---|---|---|---|
| | Average (mΩ) | Standard deviation (STD) (mΩ) | Relative comparison with Ref. (%) | Average (mΩ) | STD (mΩ) | Relative changes in impedance (%) | Relative changes in cell thickness (%) |
| Example 3 | 27.69 | 0.36 | 3.5 | 32.18 | 0.62 | 16.2 | 1.0 |
| Example 4 | 28.01 | 0.33 | 4.7 | 32.74 | 0.58 | 16.9 | 1.0 |
| Comparative Example 1 | 27.86 | 0.48 | 4.1 | 35.69 | 0.93 | 28.1 | 5.2 |
| Comparative Example 2 | 26.76 | 0.28 | 0.0 | 34.55 | 0.99 | 29.1 | 5.6 |

The separator according to an exemplary embodiment of the present disclosure includes hollow adhesive particles, and has improved surface adhesive strength considering the content of the hollow adhesive particles, so that it may be adhered to an electrode with high adhesive strength.

In addition, the method for manufacturing a separator according to an exemplary embodiment of the present disclosure may easily produce a separator having improved adhesive strength to an electrode only by forming a coating layer on a porous substrate.

In addition, the secondary battery including the separator according to an exemplary embodiment of the present disclosure has improved adhesive strength between an electrode and a separator to allow a higher capacity and a larger size, and may have substantially very high industrial applicability.

In addition, according to an exemplary embodiment of the present disclosure, a new separator which has ability to internally accommodate swelling by an electrolyte and the like while providing an excellent adhesive function between a separator and an electrode may be provided.

In addition, according to an exemplary embodiment of the present disclosure, a new separator which has a buffer function to suppress swelling by an electrolyte by internally accommodating swelling, and also prevents an adhesive from eluting into an electrolyte by an electrolyte may be provided.

In addition, according to an exemplary embodiment of the present disclosure, since swelling is suppressed to maintain adhesive strength to an electrode, that is, loss of adhesive strength by swelling is prevented, a new separator which maintains the alignment of an electrode module well even when many electrodes and separators are stacked, and a battery using the same may be provided.

Hereinabove, although the present disclosure has been described by specific matters, the examples, and the comparative examples, they have been provided only for assisting in the entire understanding of the present disclosure. Therefore, the present disclosure is not limited to the above examples. Various modifications and changes may be made by those skilled in the art to which the present disclosure pertains from this description.

**Claims**

1. A separator for separating a positive electrode from a negative electrode of a secondary battery, comprising:

   a porous substrate (100); and
   a coating layer (200) which is placed on one or both surfaces of the porous substrate (100) and includes inorganic particles (20) and hollow adhesive particles (10).

2. The separator of claim 1, wherein when a surface of the coating layer (200) facing the porous substrate (100) is referred to as a first surface and an opposite surface of the first surface is referred to as a second surface, the second surface has a higher content of the hollow adhesive particles (10) than the first surface; optionally wherein the coating layer (200) has a gradient in which the content of the hollow adhesive particles (10) is increased from the first surface towards the second surface of the coating.

3. The separator of claim 1 or 2, wherein the coating layer (200) includes at a first surface facing the porous substrate an inorganic particle sub-layer including the inorganic particles (20), and at a second surface opposite the first surface an adhesive sub-layer formed by the hollow adhesive particles (10); and/or wherein the coating layer (200) has a stacked structure of a multilayer structure in which more than one layers of a coating layer are stacked.

4. The separator of any one of claims 1 to 3, wherein the hollow adhesive particles (10) have a hollow rate of 5 to 97%; and/or wherein the hollow adhesive particles (10) have an average outer diameter of 10 nm to 10 μm.

5. The separator of any one of claims 1 to 4, wherein the hollow adhesive particles (10) include a hollow core having an empty inside (11) and a shell layer (12) formed of an adhesive material.

6. The separator of claim 5, wherein the adhesive material includes an adhesive resin having adhesive strength at room temperature or at a glass transition temperature or higher, optionally wherein the adhesive resin includes one or more resins selected from the group consisting of an acrylic-based resin, a fluorine-based resin, an amide-based resin, and copolymers of the mentioned resins;
and/or wherein the adhesive resin is crosslinked.

7. The separator of claims 5 or 6, wherein the hollow adhesive particles (10) further include a structure material layer (13) between the hollow core (11) and the shell layer (12), wherein the structure material layer serves to maintain the hollow structure.

8. The separator of any one of claims 1 to 7, further comprising: an inorganic particle layer between the porous substrate (100) and the coating layer (200).

9. A method for manufacturing a separator, the method comprising:

    a coating step of applying a coating composition including inorganic particles and hollow adhesive particles (10) on one or both surfaces of a porous substrate (100) to form a coating layer (200); and
    a drying step of drying the coating layer (200), obtaining the separator.

10. The method for manufacturing a separator of claim 9, wherein the drying is performed by hot air at 25 to 100°C, and/or further comprising applying vibration before the drying step or applying vibration with the drying.

11. The method for manufacturing a separator of claim 9 or 10, further comprising: allowing the separator on which the coating composition is applied to stand before drying after the coating step, optionally wherein for applying the coating composition multiple times on either or both surfaces of the porous substrate, for the respective surfaces the coating process and allowing to stand are performed in separate steps, wherein a second coating is applied after the first coating has been dried.

12. The method for manufacturing a separator of any one of claims 9 to 11, wherein the coating composition has a solid content of 10 to 60 wt%; and/or wherein the coating composition includes 0.2 to 20 parts by weight of the hollow adhesive particles (10) with respect to 100 parts by weight of the inorganic particles;
optionally wherein the coating layer (200) has a gradient formed by the hollow adhesive particles (10) formed at a surface of the coating layer (200) after the coating step and the drying step; and/or wherein the coating layer (200) has an adhesive sub-layer formed of the hollow adhesive particles (10) formed on the surface.

13. A secondary battery comprising the separator of any one of claims 1 to 8.

14. A method for manufacturing a secondary battery, the method comprising:

    placing the separator of any one of claims 1 to 8 between a positive electrode and a negative electrode, and then applying heat, pressure, or heat with pressure to integrate the separator and the electrodes, thereby obtaining the secondary battery.

15. Use of hollow adhesive particles, which are structured to include a hollow core having an empty inside and a shell layer formed of an adhesive material, to increase adhesion, to a porous separator substrate, of a coating layer by incorporating said adhesive particles into the coating layer, and/or to suppress swelling of a separator in a secondary battery.

FIG. 1

FIG. 2

FIG. 3

FIG. 4

Europäisches
Patentamt
European
Patent Office
Office européen
des brevets

**EUROPEAN SEARCH REPORT**

Application Number

EP 24 17 2175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 203 167 A1 (LG ENERGY SOLUTION LTD [KR]) 28 June 2023 (2023-06-28) * paragraphs [0002], [0024]; claims 1-4,8,12 * | 1,2,4-6, 9,12-15 | INV. H01M50/403 H01M50/423 H01M50/431 H01M50/443 |
| X,P | EP 4 277 003 A1 (W SCOPE KOREA CO LTD [KR]; W SCOPE CHUNGJU PLANT CO LTD [KR]) 15 November 2023 (2023-11-15) * paragraphs [0076], [0110], [0001], [0021]; claims 1,4,8,9 * | 1-6,8,9, 12-15 | H01M50/446 H01M10/0525 |
| X | US 2016/380250 A1 (UMEYAMA HIROYA [JP] ET AL) 29 December 2016 (2016-12-29) * claims 1,3; examples * | 1,2,4-6, 9-15 | |
| X | CN 104 868 086 A (GUANGDONG ZHUGUANG NEW ENERGY TECHNOLOGY CO LTD) 26 August 2015 (2015-08-26) * claims 1,2,10; examples * | 1,2,4-6, 9-15 | |
| A | US 2022/029244 A1 (KIM YONGKYOUNG [KR] ET AL) 27 January 2022 (2022-01-27) * examples * | 1-15 | TECHNICAL FIELDS SEARCHED (IPC) H01M |

The present search report has been drawn up for all claims

| Place of search | Date of completion of the search | Examiner |
|---|---|---|
| Munich | 17 September 2024 | Duval, Monica |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 2175

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | | Publication date | Patent family member(s) | | Publication date |
|---|---|---|---|---|---|
| EP 4203167 | A1 | 28-06-2023 | CN | 116325333 A | 23-06-2023 |
| | | | EP | 4203167 A1 | 28-06-2023 |
| | | | KR | 20220165920 A | 16-12-2022 |
| | | | US | 2023299420 A1 | 21-09-2023 |
| | | | WO | 2022260405 A1 | 15-12-2022 |
| EP 4277003 | A1 | 15-11-2023 | CN | 116918159 A | 20-10-2023 |
| | | | EP | 4277003 A1 | 15-11-2023 |
| | | | JP | 2024506163 A | 09-02-2024 |
| | | | KR | 20220161592 A | 07-12-2022 |
| | | | US | 2023378604 A1 | 23-11-2023 |
| | | | WO | 2022250256 A1 | 01-12-2022 |
| US 2016380250 | A1 | 29-12-2016 | CN | 105765761 A | 13-07-2016 |
| | | | JP | 6210301 B2 | 11-10-2017 |
| | | | JP | 2015106511 A | 08-06-2015 |
| | | | KR | 20160078457 A | 04-07-2016 |
| | | | US | 2016380250 A1 | 29-12-2016 |
| | | | WO | 2015079304 A1 | 04-06-2015 |
| CN 104868086 | A | 26-08-2015 | NONE | | |
| US 2022029244 | A1 | 27-01-2022 | CN | 113228397 A | 06-08-2021 |
| | | | EP | 3905381 A1 | 03-11-2021 |
| | | | KR | 20200082480 A | 08-07-2020 |
| | | | US | 2022029244 A1 | 27-01-2022 |
| | | | WO | 2020138628 A1 | 02-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190036724
- KR 20200138213
- KR 2020138213 A